# EUROPEAN PATENT APPLICATION

(11) **EP 1 304 518 A1**
(43) Date of publication of application: **23.04.2003**
(21) Application number: 02022457.2
(22) Date of filing: 04.10.2002
(51) Int. Cl.: F16L 9/06, F16L 11/15, F16L 25/00

(54) **Reinforced corrugated pipe and relative reinforcement method**

(30) Priority: 22.10.2001 IT RA20010013
(71) Applicant: IPM di Argnani Claudio & C. Snc, 48022 Lugo (Ravenna) (IT)
(72) Inventor: Argnani, Claudio, 48010 Fusignano (Ravenna) (IT)
(74) Representative: Petruzziello, Aldo

(57) **Abstract**

The invention relates to a system for stabilising the shape, and reinforcing and preventing shrinkage of cups of double-walled corrugated pipes in a plastic material, more particularly polyolefins and PVC, by drilling and subsequent injection into their closed annular ribs, which in this way also serve as forming moulds, of sufficiently fluid and preferably fast-setting materials, in quantities such as to fill the whole mould, capable after their solidification of withstanding external stresses mainly caused by shrinkage of the cup which tends to regain the position of molecular equilibrium, corresponding to its extrusion shape; these operations of drilling and injection being preferably performed during the phase of forming of the cup, therefore before the start of possible phases of shrinkage.

## Description

In the state of the art the use of double-walled corrugated pipes is becoming increasingly widespread, above all in traditional plastic materials such as polyvinyl chloride (PVC), polyethylene and polypropylene, which combine good properties of resistance to internal pressure and to external stresses with considerable lightness and consequently high saving in material compared to traditional solid-walled pipes.

However considerable problems arise during forming of the "cup", the latter being the term used in the art, including the relative standard, to refer to the end of the pipe shaped as an external sleeve or coupling, which couples during formation of the joint with the plain end, usually bevelled, of the subsequent pipe, forming a joint which takes the name of "cup joint" therefrom. The internal diameter of the cup is slightly larger than the external diameter of the pipe and tightness is achieved by gluing the two male and female ends or by adding a rubber gasket ring, usually inserted between two successive ribs.

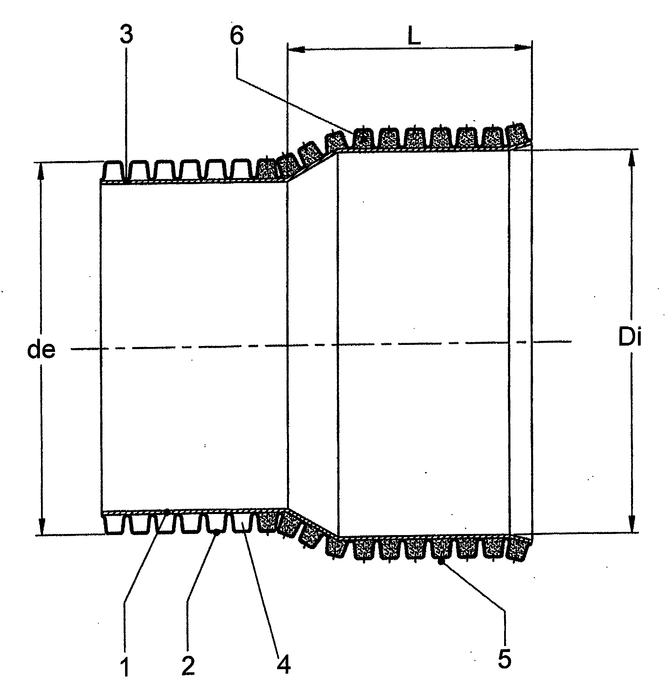

The operation of cupping consists overall in heating to the temperature of plastic softening, generally varying between 150° C and 170° C and subsequent forming, performed according to various systems, such as the use of external moulds or external pressure for shaping the exterior of the cup, and of metal mandrels or the like for shaping the interior. During these operations the thickness of the pipe, appropriately heated, is drawn circumferentially, increasing its diameter. Some plastic materials, such as polyolefins (polypropylene and polyethylene), retain however a memory, relating to the position of their molecules in the phase of newly extruded pipe. This memory leads to the presence of internal stress or tensions and to the tendency, varyingly marked according to the ambient conditions, towards shrinkage towards the position of equilibrium, even if the drawing operation took place in ideal temperature conditions for plastic deformation, conditions which nevertheless cannot be those of total melting, at which the memory would be cancelled, and the shape acquired by the pipe would also disappear. In any case, for these plastic materials, a tendency towards shrinkage of the cup remains, which may cause dangerous dimensional unevenness and non-observance of the size tolerances necessary for achieving coupling. Effective shrinkage can also be stronger due high ambient heating, for example due to prolonged exposure to the sun in the summer, and depending locally on the way in which this exposure takes place.

To avoid these problems various solutions have been researched and produced: such as to draw the pipe in excess in relation to the end dimensions of the cup, or heat it, by sophisticated systems, evenly and in a controlled manner and very close to melting, so as to cancel as far as possible the memory of the material. All these systems however can only solve the problem in part, by reducing the average extent of shrinkage, but not eliminating completely the internal tensions which, in certain ambient conditions, can be free, as not effectively combated, to cause deformation and more particularly shrinkage.

The present invention instead proposes a totally different and innovative solution: basing on the assumption that the memory of the material tends to return it gradually into the position and shape of extrusion, i.e. of a standard, non-widened pipe, thus exerting a series of normal compression tensions on each axial section of the pipe, whose effect, without any opposition, is a reduction in diameter, the solution in question aims to create additional structures, capable of opposing the aforesaid reduction in diameter, exerting radial reactions on the walls of the pipe, equal and contrary to those caused by the aforesaid normal tensions, and in this way forcing the shape of the cup to remain stable. These structures have the shape of rings concentric with the pipe and are obtained by filling, after having drilled the walls thereof, the empty spaces located inside the reinforcement ribs, between the external corrugated wall and the internal smooth wall of the pipe.

These rings must be in such a material as to resist the forces, normally compression forces, exerted by the pipe which tends to shrink.

The present solution in practice does not modify the material or tensional structure of the pipe, which can therefore be cupped (that is to say heated and formed) by standard procedures of cupping used for solid-walled pipes, but adds an element of reinforcement extraneous to the pipe, rigid and dimensionally stable, which absorbs the tensions in existence or which may be generated in the cup, opposing resistance thereto.

An innovative part of this solution is also the fact that the closed space inside the ribs of the pipe is used as a mould for injection of the reinforcement ring, thus exploiting an element with virtually zero cost.

Whereas the external corrugated wall of the cup cannot shrink because it is physically obstructed by the rings, the internal wall is materially linked to the external one in the annular zones adjacent to the ribs, and therefore stretches towards the exterior from the same external wall, but also directly from the reinforcement rings, to the extent where they are able to create adherence on their internal surface.

Since shrinkage of the cup can begin as soon as it is extracted from the mould where it solidifies and where it is cooled, injection of the reinforcement material should take place during this phase and the time of solidification of the injected ring material should be sufficiently short, fast-setting materials being therefore preferred.

There is no theoretical limitation in choosing the material of the rings, but there are however practical needs linked to the functions to be performed: given the dimensions of the sections of the ribs and the diameter of the cup, imposed by the shape of the corrugated pipe, the stresses induced by the internal tensions of the pipe must in any case be smaller than the tensions of yielding or breakage of the same material, with appropriate safety coefficients. Moreover this reinforcement material must maintain its resistance even when the temperature whereto it will be subjected in service changes, and must remain dimensionally stable and rigid but must not be fragile so as to withstand impact and vibrations.

The materials currently proposed and which meet the above requirements are polyurethane, due to its ease of injection and short setting time, and cement, whose cost is very low; nevertheless the use of any other material which has the properties indicated above does constitute an inventive limit.

The zone reinforced by the rings, which can be considered to all effects and purposes as real armouring, must preferably extend at least along the whole axial development of the cup, including the conical part, that is to say the whole zone where the tensions occur which lead to shrinkage of the cup. For this, all the rings present can be used or, if considered sufficient, taking account of their distance, only a certain number thereof, for example alternate rings. However application of reinforced rings to a single zone of the cup, to form only a local reinforcement for special purposes, does not constitute an inventive limit.

The application of these ring reinforcements can also be extended to other zones of the corrugated pipes, for needs other than those of shrinkage: for example so as to increase in certain zones resistance of the pipe to internal and external stresses, or for reinforcing areas weakened locally by particular apertures, or for increasing overall the resistance of the pipe using reinforcement materials with low specific cost, which can enable the price of the corrugated pipe to compete with that of the equivalent solid-wall pipe, or even finally for any reasons whatsoever, not indicated and not included here.

For all these cases the usefulness and convenience of applying these reinforcements also to pipes in materials other than polyolefins, not having an elastic memory in the same way, are apparent: in particular it is useful for corrugated PVC pipes, for which it however has to be considered that the application of reinforcements, also in the zone of the cup, confers further resistance to weakened walls in relation to the extent of the drawing, which increases stability in respect of ambient changes, such as alternating cold and heat, and which enables cupping to be performed in a shorter time, the material being able to contain greater internal stresses.

These and further features and advantages of the present invention will be made clearer by the following detailed description of an embodiment, illustrated by way of a nonlimiting example.

The drawing represents the axial sectional view of a cup, wherein all the rings concerned are totally filled with reinforcement material.

The reinforcement ribs of the pipe are obtained by shaping the external layer 2 which is integral with the internal smooth layer 1, in the zone 3, intermediate between two successive ribs. The internal annular space o cavity 4 is therefore closed and can be used as a mould for the injection of reinforcement material 6.

The sequence of processes can be carried out as follows:
1) Heating of the end of the pipe for a length equal at least to "L", which is the length of the cup with standard processes, already known and commonly used for solid-walled pipes.
2) Forming of the heated part, making the pipe, at its end, assume the cup shape illustrated; the diameter "Di" indicated in the drawing must be slightly greater than the external diameter of the pipe "de"; forming is performed according to standard processes, already known and commonly used for solid-walled pipes.
3) Drilling of each ring with a tool, as indicated in 5; at least two holes 5 per rib should be made to facilitate filling of the annular cavity 4 and emptying of air.
4) Injection according to standard processes of sufficiently fluid, fast setting material 6 into every cavity 4, in such a quantity as to fill it.

Steeps 3) and 4) partially overlap steep 2) in terms of performance times; the diameter "Di" must be contained within appropriate tolerance margins, necessary for good coupling.

The drawing refers to a particular type of corrugated pipe; nevertheless the fact that the shape and dimensions of the ribs are different from those indicated, or that the cup has different shapes and dimensions from those illustrated, for example without the final coupling cone, does not limit the invention.

The annular cavities 4 filled with reinforcement material 6 can be extended exactly to the length "L" of the cup, or more extensively along the axis (as illustrated where a cavity in excess is filled), or less extensively, not including for example the conical part for joining with the pipe, all these variants coming within the scope of the invention.

## Claims

1. A corrugated pipe, made of plastic material, comprising a smooth cylindrical internal wall (1) and a corrugated external wall (2), integral with the inner wall (1), and having a plurality of coaxial annular ribs defining respective annular cavities (4), **characterised in that** at least some of said annular cavities (4) of the ribs are filled with reinforcement material (6) for the purpose of improving resistance of the pipe to stresses.

2. A corrugated pipe according to claim 1, **characterised in that** said reinforcement material (6) is a material able to pass from the solid state to the solid state.

3. A corrugated pipe according to claim 2, **characterised in that** said reinforcement material (6) filling the ribs is of the fast-setting type.

4. A corrugated pipe according to claim 3, **characterised in that** said reinforcement material (6) includes polyurethane.

5. A corrugated pipe according to any one of the preceding claims, **characterised in that** said internal and external walls (1, 2) of the pipe are made of plastic material such as polyvinyl chloride (PVC) and/or polyolefin resins.

6. A corrugated pipe according to any one of the preceding claims, **characterised in that** said reinforcement material (6) filling the ribs is a cheaper material than the plastic material used to produce the pipe.

7. A corrugated pipe according to claim 6, **characterised in that** said reinforcement material (6) includes cement.

8. A corrugated pipe according to any one of the preceding claims, **characterised in that** it comprises in at least one of its ends a "cup", that is to say a portion of pipe with a larger diameter to allow coupling of the end of another tube, and that said reinforcement material (6) is provided inside at least some of the annular ribs (4) disposed around said cup.

9. A reinforcement method for a corrugated tube made of plastic material, the tube comprising a smooth cylindrical internal wall (1) and a corrugated external wall (2), integral with the internal wall (1), and having a plurality of annular coaxial ribs defining respective annular cavities (4), **characterised in that** said method comprises filling of at least some of said annular cavities (4) of the ribs with reinforcement material (6).

10. A reinforcement method for a corrugated pipe according to claim 9, **characterised in that** said reinforcement material (6) is injected into the annular cavities (4) of the ribs in the fluid state subsequently to solidify therein.

11. A reinforcement method for a corrugated pipe according to claim 9 or 10, **characterised in that** two holes (5) are made in each rib to be filled, a first hole for injection of the reinforcing material (6) and a second hole for emptying of the air from the annular cavity (4) that is filled.

12. A reinforcement method for a corrugated pipe according to any one of claims 9 to 11, **characterised in that** it further comprises heating of at least one end of the pipe to form, by moulding, a "cup", that is to say a portion of greater diameter for coupling of a smooth end of another pipe.
